Europäisches Patentamt

European Patent Office

Office européen des brevets

(11) Numéro de publication: **0 298 854**
**A1**

## (12) DEMANDE DE BREVET EUROPEEN

(21) Numéro de dépôt: **88401725.2**

(22) Date de dépôt: **04.07.88**

(51) Int. Cl.⁴: **B 60 C 17/06**

(30) Priorité: **07.07.87 FR 8709637**

(43) Date de publication de la demande:
**11.01.89 Bulletin 89/02**

(84) Etats contractants désignés:
**BE DE ES GB IT NL SE**

(71) Demandeur: **HUTCHINSON**
**2 rue Balzac**
**F-75008 Paris (FR)**

(72) Inventeur: **Riquier, Didier**
**9, rue Anatole France**
**F-95340 Persan (FR)**

**Risquez, José**
**26, rue des Martyrs**
**F-95660 Champagne-Sur-Oise (FR)**

(74) Mandataire: **Orès, Bernard et al**
**Cabinet ORES 6, Avenue de Messine**
**F-75008 Paris (FR)**

(54) Dispositif de roulage à plat.

(57)     Dispositif de roulage à plat pour roue de véhicule, muni d'un pneumatique sans chambre à air monté sur la jante de la roue, avec à l'intérieur dudit pneumatique un élément de support toroïdal dont la surface externe est distante de la surface interne de la bande de roulement du pneumatique quand celui-ci est dans sa condition normale de fonctionnement.

Ledit élément toroïdal (11) est conformé suivant une poutre creuse en matériau élastomère à même section droite sur la totalité de son envergure angulaire, dont la surface interne (32) est ménagée par une multiplicité d'arceaux (33) en un matériau à haut module de flexion qui forme ainsi une armature de la poutre et qui sont réunis entre eux par ledit matériau élastomère.

FIG.1

EP 0 298 854 A1

## Description

### DISPOSITIF DE ROULAGE A PLAT

La présente invention a pour objet un dispositif perfectionné de roulage à plat.

On connaît déjà diverses réalisations de dispositifs de roulage à plat, c'est-à-dire de dispositifs qui, placés à l'intérieur d'un pneumatique sans chambre à air, monté sur une jante, permettent aux véhicules dont ils équipent les roues de continuer à rouler de manière satisfaisante en cas de diminution partielle ou totale de la pression de gonflage. De tels dispositifs trouvent application pour des roues de véhicules militaires auxquels ils permettent de se déplacer même en cas de crevaison par balles ou, encore, pour des roues de véhicules de secours amenés à évoluer dans des zones de circulation difficile et pour lesquels la mobilité du véhicule doit être conservée en toute circonstance.

Les conditions que doivent remplir de tels dispositifs sont à la fois sévères et contradictoires. Il importe en effet, lors d'une crevaison ou même d'une chute partielle de la pression de gonflage,

. d'empêcher les talons du pneumatique de se séparer de leur siège sur la jante, que celle-ci soit du type plate démontable, ou non démontable, ou encore, à puits ou creux de jante (drop center) ;

. d'éviter que la bande de roulement qui vient au contact du dispositif ne soit trop rapidement endommagée par poinçonnement ;

. de conserver aux roues des caractéristiques d'amortissement aussi bonnes que possible, tout en évitant un échauffement qui a tendance à se produire lorsque le dispositif comprend ou est à base de matériaux élastomères souples.

A ces conditions, que l'on peut qualifier de mécaniques et qui sont liées par principe même au roulage à plat, s'ajoute également la nécessité pour le dispositif d'être léger, de ne pas gêner le roulage, bien entendu, d'être opératoire en tous lieux, y compris sur des terrains difficiles, comme des terrains boueux, sablonneux et rocailleux. En outre, il importe que le dispositif puisse être monté et démonté en tout terrain, sans outillage spécialisé et que son coût ne s'oppose pas à son utilisation sur les roues des véhicules qu'il est destiné à équiper.

Parmi les tentatives faites pour fournir un dispositif qui satisfasse aux conditions rappelées ci-dessus, il convient de mentionner les réalisations comportant un support toroïdal logé à l'intérieur du pneumatique sans chambre et qui sont, par exemple, du type de celles divulguées dans FR-A-2 372 040, ou dans GB-A-1 305 383. Dans un dispositif selon le premier document antérieur, le support toroïdal qui est formé par la juxtaposition de dents circonférentiellement espacées et en forme de bandes, ou par un élément plein, est lui-même porté par un tube interne toroïdal gonflable placé sur la jante pour serrer élastiquement les talons du pneumatique contre les rebords de celle-ci. La structure est donc complexe, sujette à aléas en cas de crevaison du tube interne toroïdal gonflable et, en outre, ou bien ne procure pas une surface d'appui satisfaisante pour la bande de roulement dans le cas du support toroïdal à dents, ou bien est d'un poids et d'un cout prohibitifs, lorsque le support toroïdal est plein. Dans un dispositif selon le second document antérieur, le support toroïdal est un ressort en fil métallique enroulé hélicoïdalement de sorte que sont présents des inconvénients de poids et de surface d'appui non satisfaisants lors du roulage à plat.

Le problème reste donc posé de fournir un dispositif de roulage à plat perfectionné qui pallie les inconvénients des dispositifs connus, tout en satisfaisant à l'ensemble des conditions rappelées ci-dessus.

Le problème est résolu, selon l'invention, par un dispositif de roulage à plat pour roue de véhicule munie d'un pneumatique sans chambre à air monté sur la jante de la roue, avec à l'intérieur dudit pneumatique un élément de support toroïdal dont la surface externe est distante de la surface interne de la bande de roulement du pneumatique quand celui-ci est dans sa condition normale de fonctionnement et dont la surface interne est ménagée par une multiplicité d'arceaux, par le fait que ledit élément toroïdal est conformé suivant une poutre creuse en matériau élastomère a même section droite sur la totalité de son envergure angulaire, armée par les arceaux en matériau à haut module de flexion qui sont réunis entre eux par ledit matériau élastomère.

Dans une forme de réalisation préférée, les arceaux sont ménagés par les spires d'un enroulement hélicoïdal d'un élément filiforme en ledit matériau à haut module de flexion.

Dans une exécution préférée de cette réalisation, ledit matériau à haut module de flexion est un matériau métallique, avantageusement composite, à base de fibres de verre et de résine.

Selon une autre caractéristique de l'invention, l'élément filiforme en matériau à haut module de flexion est à section droite rectangulaire, une telle section ayant un moment d'inertie important, favorable à la rigidité de l'élément toroïdal et fournissant, en outre, de meilleures caractéristiques de roulement lors du roulage à plat.

En variante, la section droite du matériau à haut module de flexion est à contour parallélépipédique ou circulaire, ladite section étant pleine ou creuse.

Dans une autre réalisation de l'invention, les arceaux qui forment l'armature de la poutre creuse sont ménagés par des pièces individuelles, en forme de voûte, disposées à intervalles réguliers et qui prennent appui dans la base de la poutre creuse.

Dans une telle réalisation, l'invention prévoit, complémentairement, d'associer aux pieds d'appui des arceaux dans la base de la poutre des câbles d'armature inextensibles, quelque peu analogues à des tringles.

Selon l'invention, également, on prévoit d'associer à l'élément de support toroïdal tel que défini ci-dessus un verrou de talon qui, de façon en soi connue, contribue à assurer la sécurité en cas de roulage à plat en s'opposant, notamment, à un déjantage du pneumatique.

Lorsque de façon préférée, le verrou de talon est sous forme d'une bande annulaire en matériau élastomère armée par des moyens de renfort inextensible, comme des câbles ou analogues, on prévoit que le support toroïdal soit disposé de façon excentrée à l'intérieur du pneumatique, c'est-à-dire que le plan médian perpendiculaire à l'axe de révolution du support toroïdal ne soit pas confondu avec le plan équatorial du pneumatique, la base de la poutre que forme ledit support et qui repose sur la jante de la roue étant alors découpée pour ménager un logement d'une extrémité de ladite bande de verrou de talon dont l'autre extrémité prend appui sur un talon du pneumatique.

Quel que soit le mode de réalisation de l'élément de support toroïdal, la base de la poutre que forme ledit support et qui repose sur la jante de la roue est avantageusement munie d'une armature de renforcement, inextensible, qui contribue à assurer la rigidité nécessaire au verrouillage des talons du pneumatique.

L'invention sera bien comprise par la description qui suit, faite à titre d'exemple et en référence au dessin annexé dans lequel :

- la figure 1 est une vue schématique partielle, en coupe, d'une roue équipée d'un dispositif selon l'invention ;

- la figure 2, est une vue partielle, en coupe, selon la ligne 2-2 de la figure 1 ;

- la figure 3 est une vue analogue à celle de la figure 1 mais pour une autre forme de réalisation ;

- la figure 4 est une vue partielle en coupe selon la ligne 4-4 de la figure 3.

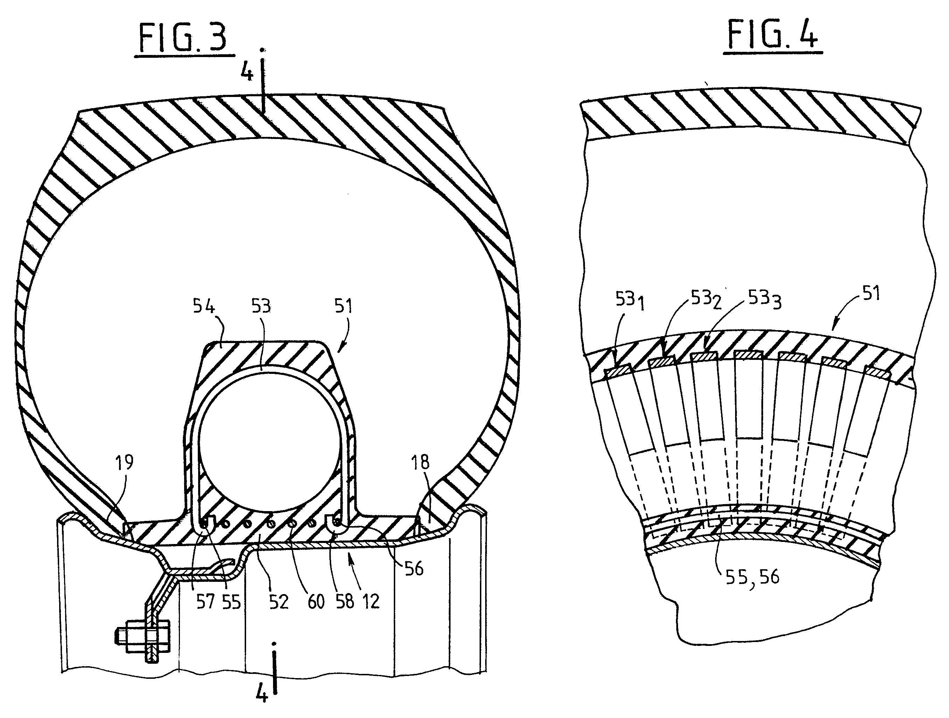

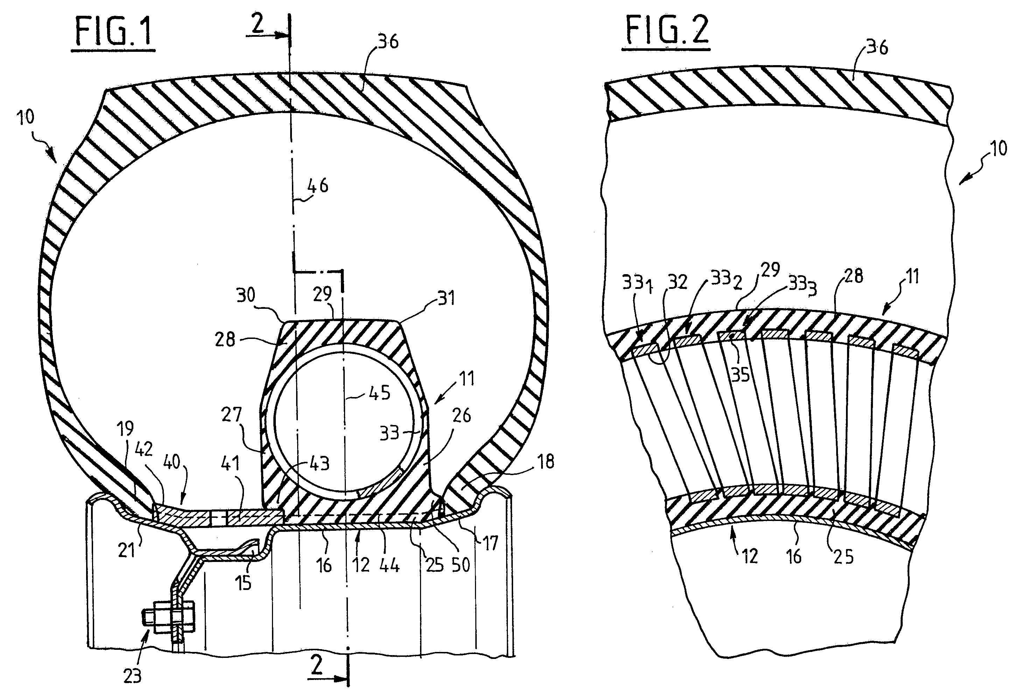

On se réfère d'abord aux figures 1 et 2 qui montrent une première forme de réalisation d'un dispositif de roulage à plat selon l'invention prévu pour équiper une roue à pneumatique, sans chambre à air. Il comprend essentiellement une poutre support creuse 11, de forme générale toroïdale, logée à l'intérieur du pneumatique 10 lequel est monté sur une jante 12. Dans la forme de réalisation décrite et représentée, ladite jante est du type démontable, à puits de jante 15 adjacent à une partie de jante plate 16 dont l'épaulement 17 porte un talon 18 du pneumatique 10, l'autre talon 19 reposant sur la partie amovible 21 de la jante qui est propre à être fixée à un flasque 22 prolongeant la partie 16 par des goujons et boulons 23.

L'élément de support toroïdal 11, dont le diamètre externe est environ égal au diamètre moyen pris de la jante au plus grand diamètre du pneumatique, est à section droite constante sur toute l'envergure angulaire dudit élément, ladite section droite étant à contour externe sensiblement rectangulaire et à contour interne circulaire. De façon plus précise, l'élément de support toroïdal 11 est conformé suivant une poutre creuse en matériau élastomère qui, à partir de sa base 25 par laquelle il repose sur la jante présente des flancs 26 et 27 d'abord sensiblement parallèles, puis inclinés l'un vers l'autre, à leurs extrémités distantes de la base 25, pour ménager un coussin 28 à surface externe 29 lisse et continue raccordée aux flancs par de légers arrondis 30 et 31. Comme bien montré sur les figures 1 et 2, la surface interne 32 de la poutre creuse 11 est ménagée par une multiplicité d'arceaux $33_1$ , $33_2$ , $33_3$ etc... constitués ici par les spires enroulées hélicoïdalement d'un élément filiforme en un matériéu à haut module de flexion, métal,ou, avantageusement, un matériau composite en fibres de verre et résine, par exemple résine époxy. Les spires à section droite sensiblement rectangulaire sont réunies entre elles par le matériau élastomère constitutif de la poutre creuse qui assure ainsi la cohésion de la structure.

En variante, l'élément filiforme constitutif de l'enroulement hélicoïdal est à section parallélépipédique autre que rectangulaire, ou encore est à section circulaire pleine ou creuse.

Dans encore une autre variante, l'élément filiforme en matériau composite est lui-même armé par un fil ou fibre, comme montré schématiquement en 35.

Quelle que soit la réalisation de l'enroulement hélicoïdal, celui-ci confère à la poutre creuse 11, par sa structure et ses dimensions, une grande rigidité radiale permettant d'emmagasiner et de restituer l'énergie de roulage lorsque, à la suite d'une chute de la pression de gonflage, la bande de roulement 36 du pneumatique 10 vient au contact de la surface 29 dans la zone de ladite surface la plus proche du sol.

Pour le maintien de l'élément de support toroïdal 11 dans le pneumatique 10, l'invention prévoit, dans la forme de réalisation décrite et représentée, d'associer à la poutre creuse 11 un verrou de talons 40, réalisé ici sous forme d'une bande annulaire 41 en matériau élastomère munie d'une armature de renforcement 42, la bande prenant appui par une de ses faces latérales contre le talon 19 et étant logée sur son autre face latérale dans une gorge de forme conjuguée 43 de la base 25 de la poutre, laquelle est avantageusement, elle aussi, renforcée par une armature 44.

Dans la forme de réalisation décrite et représentée, la poutre creuse 11 est logée dans le pneumatique 10 de manière excentrée, c'est-à-dire a/ec son plan équatorial 45 distant du plan équatorial 46 du pneumatique dont le second talon 18 est maintenu au contact de l'épaulement 17 de la jante 12 par une nervure 50 de la base 25 de la poutre.

Dans une variante, non représentée, le verrou de talons n'est pas réalisé par une pièce distincte de la poutre, mais par la base 25 elle-même, dont les dimensions, mesurées parallèlement à l'axe de la roue, correspondent à l'écartement des talons 18 et 19 dans la condition normale du pneumatique, l'élément support toroïdal n'étant pas alors excentré comme dans la réalisation montrée aux figures 1 et 2.

On se réfère maintenant aux figures 3 et 4 relatives à une autre forme de réalisation. Dans celle-ci, l'élément de support toroïdal est une poutre creuse 51 ayant sensiblement la même section droite que celle de la poutre 11 de la réalisation précédente, avec toutefois une base 52 à armature de renforcement 60 au contact de la jante 12 dont la longueur est suffisante pour assurer, à elle seule, la fonction de verrou des talons 18 et 19 du pneumatique. Dans cette réalisation, toutefois, les arceaux

$53_1$ , $53_2$ , $53_3$ , etc... réunis entre eux par le matériau élastomère constitutif de la poutre, ne sont pas ménagés par un enroulement hélicoïdal, mais sont réalisés par des éléments distincts, en forme de voûte, s'étendant entre le coussin 54 de l'élément de support toroïdal et la base 52 de l'élément où ils sont avantageusement maintenus par des câbles inextensibles 55 et 56, quelque peu analogues à des tringles de pneumatique et qui sont logés dans des retours en U, 57 et 58, respectivement, des pieds desdits arceaux. De façon analogue à ce qui a été décrit ci-dessus, les arceaux en forme de voûte sont avantageusement réalisés en un matériau à haut module de flexion, par exemple un matériau composite en résine époxy et fibres de verre dont la section droite est choisie pour présenter un moment d'inertie important, par exemple, est à contour rectangulaire.

En variante, toutefois, la section peut être circulaire ou parallélépipédique, pleine ou creuse, avec ou sans armature complémentaire.

Un élément de support toroïdal selon l'invention peut être réalisé par les techniques usuelles de mise en oeuvre des matériaux élastomères, par exemple, dans le cas d'arceaux à enroulement hélicoïdal en disposant un élément filiforme sur un corps torique creux et en procédant ensuite à un moulage du matériau élastomère par les techniques usuelles de transfert-injection ou de compression.

Quel que soit le mode de réalisation de l'élément de support toroïdal, celui-ci présente une flexibilité axiale suffisante permettant son introduction facile dans l'ouverture du pneumatique après déformation à l'aide d'une sangle, celle-ci étant ensuite libérée pour la mise en position de l'élément dans le pneumatique.

Un tel montage, particulièrement simple, peut être effectué sans outillage particulier, sur le terrain, ce qui constitue encore un avantage complémentaire du dispositif de l'invention.

En outre, la présence des arceaux en matériau à haut module de flexion qui forment la surface interne des éléments de support toroïdal confère audit support une grande rigidité radiale propre à emmagasiner et restituer l'énergie de roulage, tandis que la présence de matériau élastomère pour réunir entre eux les arceaux sur la face de la poutre distante de la base ménage une surface lisse et continue avec laquelle vient en contact la surface interne de la bande de roulement du pneumatique, lors du roulage à plat, avec pour conséquence une réduction du frottement favorable à la conservation des qualités de ladite bande de roulement.

**Revendications**

1 .- Dispositif de roulage à plat pour roue de véhicule, muni d'un pneumatique sans chambre à air monté sur la jante de la roue, avec à l'intérieur dudit pneumatique un élément de support toroïdal dont la surface externe est distante de la surface interne de la bande de roulement du pneumatique quand celui-ci est dans sa condition normale de fonctionnement et dont la surface interne est ménagée par une multiplicité d'arceaux, caractérisé en ce que ledit élément toroïdal (11, 51) est conformé suivant une poutre creuse en matériau élastomère à même section droite sur la totalité de son envergure angulaire, armée par les arceaux (33, 53) en matériau à haut module de flexion qui sont reunis entre eux par ledit matériau élastomère.

2.- Dispositif de roulage à plat selon la revendication 1, caractérisé en ce que les arceaux sont ménagés par les spires ($33_1$ , $33_2$ , $33_3$ ...) d'un enroulement hélicoïdal d'un élément filiforme en ledit matériau à haut module de flexion.

3.- Dispositif de roulage à plat selon la revendication 1, caractérisé en ce que les arceaux sont ménagés par des pièces individuelles en forme de voûte ($53_1$ , $53_2$ , $53_3$ ...) disposées à intervalles réguliers et qui prennent appui dans la base (52) de la poutre creuse (51).

4.- Dispositif de roulage à plat selon l'une quelconque des revendications précédentes, caractérisé en ce que la base (25, 52) de l'élément de support toroïdal comporte une armature de renforcement (44, 60) contribuant à la rigidité nécessaire de ladite base pour agir en tant que verrou de talon.

5.- Dispositif de roulage à plat selon l'une quelconque des revendications précédentes, caractérisé en ce que la section droite constante de la poutre creuse est à contour externe sensiblement rectangulaire et à contour interne sensiblement circulaire, ménageant ainsi à l'opposé de la base (25, 52) au contact de la jante (12) un coussin (28) de matériau élastomère à surface externe (29) lisse et continue.

6.- Dispositif de roulage à plat selon l'une quelconque des revendications précédentes, caractérisé en ce que son diamètre externe est approximativement égal au diamètre moyen pris de la jante au plus grand diamètre du pneumatique qu'il est destiné à équiper.

7.- Dispositif de roulage à plat selon l'une quelconque des revendications précédentes, caractérisé en ce que le matériau à haut module de flexion constitutif des arceaux est un matériau métallique, avantageusement, composite, à base de fibres de verre et de résine.

8.- Dispositif de roulage à plat, selon l'une quelconque des revendications précédentes, caractérisé en ce que la section droite de l'élément filiforme en matériau à haut module de flexion est parallélépipédique, avantageusement rectangulaire.

9.- Dispositif de roulage à plat, selon l'une quelconque des revendications 1 à 7, caractérisé en ce que la section droite de l'élément filiforme en matériau à haut module de flexion est circulaire, pleine ou creuse et est, le cas échéant, munie d'une armature complémentaire (35).

10.- Dispositif de roulage à plat selon l'une quelconque des revendications précédentes, caractérisé en ce qu'à l'élément de support toroïdal (11) est associé un verrou de talon sous forme d'une bande annulaire (40) en matériau élastomère munie d'une armature (42) qui prend appui à une de ses extrémités frontales contre un talon (19) du pneumatique et à son autre extrémité frontale contre la base (25) dudit élément de support toroïdal (11).

11.- Dispositif de roulage à plat, selon la revendication 10, caractérisé en ce que la base (25) de la poutre creuse (11) est découpée suivant une gorge (43) de réception d'une extrémité de ladite bande (40) de verrou de talon et en ce que ladite base (25) prend appui par une nervure (50) contre le talon (18) du pneumatique non au contact de ladite bande de verrou (40).

12.- Dispositif de roulage à plat selon les revendications 1 à 3, caractérisé en ce qu'aux pieds (57, 58) des pièces en forme de voûte (53) sont associées des armatures analogues à des tringles (55, 56) inextensibles.

13.- Dispositif de roulage à plat selon les revendications 10 et 11, caractérisé en ce qu'il est monté dans le pneumatique (10) de manière excentrée, c'est-à-dire avec son plan équatorial (45) distant du plant équatorial (46) du pneumatique (10).

FIG. 4

FIG. 3

FIG.2

FIG.1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 305 383  (N.J. GILLET)<br>* Page 1, ligne 46 - page 2, ligne 14 *<br>--- | 1,2,7,9 | B 60 C  17/06 |
| A | DE-A-2 406 422  (CONTINENTAL)<br>--- | | |
| A | FR-A-2 372 040  (UNIROYAL)<br>--- | | |
| A | US-A-3 435 872  (T. JOHNSON)<br>----- | | |

**DOMAINES TECHNIQUES RECHERCHES (Int. Cl.4)**

B 60 C  17/00

Le présent rapport a été établi pour toutes les revendications

| Lieu de la recherche | Date d'achèvement de la recherche | Examinateur |
|---|---|---|
| LA HAYE | 06-09-1988 | SCHMITT L.P. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

  & : membre de la même famille, document correspondant

EPO FORM 1503 03.82 (P0402)